# EUROPEAN PATENT APPLICATION

(11) **EP 4 814 780 A1**
(43) Date of publication of application: **30.09.2026**
(21) Application number: 24902722.8
(22) Date of filing: 06.12.2024
(51) Int. Cl.: G06F 40/166

(54) **TEXT PROCESSING METHOD AND APPARATUS USING SAME**

(30) Priority: 15.12.2023 CN 202311734367
(71) Applicant: Huawei Technologies Co., Ltd., Shenzhen, Guangdong 518129 (CN)
(72) Inventor: FEI, Weizhi, Shenzhen, Guangdong 518129 (CN); NIU, Xueyan, Shenzhen, Guangdong 518129 (CN); ZHOU, Pingyi, Shenzhen, Guangdong 518129 (CN); HOU, Lu, Shenzhen, Guangdong 518129 (CN); REN, Xiaozhe, Shenzhen, Guangdong 518129 (CN); BAI, Bo, Shenzhen, Guangdong 518129 (CN); DENG, Lei, Shenzhen, Guangdong 518129 (CN); HAN, Wei, Shenzhen, Guangdong 518129 (CN)
(74) Representative: MERH-IP Matias Erny Reichl Hoffmann Patentanwälte PartG mbB
(86) International application number: PCT/CN2024/137366
(87) International publication number: WO 2025/124301

(57) **Abstract**

A text processing method is disclosed, and is applied to the field of text generation. The method includes: obtaining a text sequence, where the text sequence includes a plurality of subtext sequences; and grouping the plurality of subtext sequences to obtain a plurality of text groups, where a semantic similarity between subtext sequences included in a same text group is greater than a first threshold, and the plurality of text groups are used to obtain model output via a language model. In this application, a long text input to the language model is compressed into a short natural language text while important semantic information is retained. In this way, an input length of the language model is equivalently extended.

## Description

This application claims priority to Chinese Patent Application No. 202311734367.1, filed with the China National Intellectual Property Administration on December 15, 2023 and entitled "TEXT PROCESSING METHOD AND APPARATUS", which is incorporated herein by reference in its entirety.

### TECHNICAL FIELD

This application relates to the field of artificial intelligence, and in particular, to a text processing method and apparatus.

### BACKGROUND

Artificial intelligence (Artificial Intelligence, AI) is a theory, a method, a technology, and an application system in which human intelligence is simulated, extended, and expanded by using a digital computer or a machine controlled by the digital computer, to perceive an environment, obtain knowledge, and obtain an optimal result based on the knowledge. In other words, artificial intelligence is a branch of computer science, and is intended to understand essence of intelligence and produce a new intelligent machine that can react in a manner similar to human intelligence. Artificial intelligence is to research design principles and implementation methods of various intelligent machines, to enable the machines to have perception, inference, and decision-making functions.

A large language model is a neural network model that is trained based on a large amount of text data and that has a large quantity of parameters. The large language model can accurately understand the meaning of a language text or generate a specified natural language text, and can effectively process various natural language processing tasks, such as translation, dialogue, and code generation, which are important tasks. Therefore, it has great commercial value. However, a current large language model usually has a limit on a length of an input text, and therefore cannot be effectively deployed in long-text scenarios, such as books, academic papers, or legal contracts.

There are usually two main reasons for the limit on the length of the input text of the language model. First, the language model is usually trained based on short texts, and positional encoding of the large language model does not directly adapt to long texts. As a result, performance of the large language model on the long texts significantly deteriorates. Second, inference costs of the language model increase with the length of the input text. Longer texts impose higher loads on an inference engine and a platform.

Therefore, there is an urgent need for a method for increasing an effective input length of the language model.

### SUMMARY

This application provides a text processing method, in which a plurality of subtext sequences in a text sequence are grouped, and a language model is processed subsequently at a granularity of a text group. Because semantics of subtext sequences in a text group are similar, processing accuracy of the language model can be ensured while an effective input length of the language model is increased.

According to a first aspect, this application provides a text processing method. The method includes: obtaining a text sequence, where the text sequence includes a plurality of subtext sequences; and grouping the plurality of subtext sequences to obtain a plurality of text groups, where a semantic similarity between subtext sequences included in a same text group is greater than a first threshold, and the plurality of text groups are used to obtain model output via a language model.

In this application, the plurality of subtext sequences in the text sequence are grouped, and a length of a subtext sequence included in each group is reduced compared with that of the text sequence. In addition, because semantics of subtext sequences in the text group are similar, that is, the subtext sequences in the text group are consecutive (a text group formed by subtext sequences with similar semantics may express a common or similar topic, and in this case, consecutiveness and coherence of the subtext sequences in the text group are higher), the consecutive subtext sequences can ensure that the text group obtained through grouping does not lose excessive semantic information. When the language model is processed subsequently at a granularity of a text group, accuracy of the model output can be ensured. In this way, processing accuracy of the language model is ensured while an effective input length of the language model is increased.

The text sequence is one of common serialized data types. The text sequence may also be referred to as text data. The text data may be considered as a sequence of characters or a sequence of words. In other words, the text sequence may be data obtained by arranging the characters or the words in a specific order. All subtext sequences may be consecutive partial sequences in the text sequence.

After the plurality of text groups are obtained, compression, sequence extension, and other processing may further be performed on each text group.

In a possible implementation, the method further includes: compressing each of the plurality of text groups to obtain a plurality of processing results. That the plurality of text groups are used to obtain the model output via the language model includes: The plurality of processing results are used to obtain the model output via the language model.

In this application, a long-text sequence (when the text sequence exceeds a maximum input length supported by the language model, the text sequence may be referred to as a long text) input to the language model is compressed into a short natural language text. In this way, an input length of the large language model is equivalently extended. In addition, in this embodiment of this application, subtext sequences in each text group obtained through grouping describe content with similar semantics, and coherence of content of each subtext sequence can be maintained (semantics of text content with higher consecutiveness and coherence are similar). This reduces a loss of text semantic information during compression, and improves compression effect.

In a possible implementation, a semantic similarity between subtext sequences included in different text groups is less than the first threshold.

To ensure high consecutiveness between subtext sequences in a same text group (in other words, positions in the original text sequence are consecutive or very close, so that richer consecutive semantic information can be identified in a compression process, thereby improving compression quality), when the subtext sequences are grouped, in addition to a semantic similarity, a similarity between positions, of the subtext sequences, in the text sequence may also be considered. That is, a similarity between positions of subtext sequences included in a same text group, in the text sequence may be greater than a second threshold through grouping. In addition, a similarity between positions, of subtext sequences included in a same text group, in the text sequence may be less than the second threshold through grouping.

In a possible implementation, at least two of the plurality of subtext sequences overlap with each other. Overlapping can improve consecutiveness between the subtext sequences.

In a possible implementation, the method further includes: concatenating the plurality of processing results based on a relationship between positions, of the plurality of text groups, in the text sequence, to obtain a concatenated processing result.

In a possible implementation, the method further includes: obtaining a processing result of the text sequence via the language model based on the plurality of text groups.

In a possible implementation, compressing each of the plurality of text groups to obtain the plurality of processing results includes: compressing each of the plurality of text groups via the language model or a machine learning model other than the language model, to obtain the plurality of processing results.

Machine learning used for compression also has a limit on a length of an input text. However, in the manner in this application, the text sequence is grouped, and during compression, a long text input to the compression model is segmented and grouped to obtain a short text group. In this way, the input length of the compression model is equivalently extended. In addition, subtext sequences included in each text group describe content with similar semantics, and coherence of content of each subtext sequence can be maintained. This reduces a loss of text semantic information during compression, and improves compression effect.

In a possible implementation, the model output is a result obtained by performing one of the following tasks on the text sequence: a summary extraction task, a text generation task, a dialog task, a question answering task, a text translation task, and a knowledge retrieval task.

According to a second aspect, this application provides a text processing apparatus. The apparatus includes:
an obtaining module, configured to obtain a text sequence, where the text sequence includes a plurality of subtext sequences; and
a grouping module, configured to group the plurality of subtext sequences to obtain a plurality of text groups, where a semantic similarity between subtext sequences included in a same text group is greater than a first threshold, and the plurality of text groups are used to obtain model output via a language model.

In a possible implementation, the apparatus further includes:
a compression module, configured to compress each of the plurality of text groups to obtain a plurality of processing results.

That the plurality of text groups are used to obtain the model output via the language model includes:

The plurality of processing results are used to obtain the model output via the language model.

In a possible implementation, a semantic similarity between subtext sequences included in different text groups is less than the first threshold.

In a possible implementation, a similarity between positions, of subtext sequences included in a same text group, in the text sequence is greater than a second threshold.

In a possible implementation, a similarity between positions, of subtext sequences included in a same text group, in the text sequence is less than the second threshold.

In a possible implementation, at least two of the plurality of subtext sequences overlap with each other.

In a possible implementation, the compression module is further configured to:
concatenate the plurality of processing results based on a relationship between positions, of the plurality of text groups, in the text sequence, to obtain a concatenated processing result.

In a possible implementation, the apparatus further includes:
a task processing module, configured to obtain a processing result of the text sequence via the language model based on the plurality of text groups.

In a possible implementation, the compression module is specifically configured to:
compress each of the plurality of text groups via the language model or a machine learning model other than the language model, to obtain the plurality of processing results.

In a possible implementation, the model output is a result obtained by performing one of the following tasks on the text sequence:
a summary extraction task, a text generation task, a dialog task, a question answering task, a text translation task, and a knowledge retrieval task.

According to a third aspect, an embodiment of this application provides a text processing apparatus, including a memory, a processor, and a bus system. The memory is configured to store a program, and the processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program, and when the computer program is run on a computer, the computer is enabled to perform the method according to any one of the first aspect and the optional implementations of the first aspect.

According to a fifth aspect, an embodiment of this application provides a computer program. When the computer program is run on a computer, the computer is enabled to perform the method according to any one of the first aspect and the optional implementations of the first aspect.

According to a sixth aspect, this application provides a chip system. The chip system includes a processor, configured to support a text processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1A is a diagram of a structure of an artificial intelligence main framework;
FIG. 1B and FIG. 1C are diagrams of an application system framework according to this application;
FIG. 1D is a diagram of an optional hardware structure of a terminal;
FIG. 2 is a diagram of a structure of a server;
FIG. 3 is a diagram of a system architecture according to this application;
FIG. 4 shows a cloud service procedure;
FIG. 5 is a schematic flowchart of a text processing method according to an embodiment of this application;
FIG. 6 is a schematic flowchart of text sequence compression;
FIG. 7 is a schematic flowchart of a text processing method according to an embodiment of this application;
FIG. 8 is a diagram of beneficial effect of this application;
FIG. 9 is a diagram of a structure of a text processing apparatus according to an embodiment of this application;
FIG. 10 is a diagram of a structure of an execution device according to an embodiment of this application;
FIG. 11 is a diagram of a structure of a training device according to an embodiment of this application; and
FIG. 12 is a diagram of a structure of a chip according to an embodiment of this application.

### DESCRIPTION OF EMBODIMENTS

The following describes embodiments of this application with reference to accompanying drawings in embodiments of this application. Terms used in implementations of this application are merely used to explain specific embodiments of this application, but are not intended to limit this application.

The following describes embodiments of this application with reference to accompanying drawings. A person of ordinary skill in the art may learn that, with development of technologies and emergence of new scenarios, the technical solutions provided in embodiments of this application are also applicable to similar technical problems.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, terms "include" and "have" and any variations thereof are intended to cover non-exclusive inclusion, so that a process, method, system, product, or device that includes a series of units is not necessarily limited to those units, but may include other units not explicitly listed or inherent to such a process, method, product, or device.

The terms "substantially (substantially)", "about (about)", and the like used in this specification are approximation terms rather than degree terms, and are intended to consider inherent deviations of measured values or computed values that are known to a person of ordinary skill in the art. In addition, when embodiments of this application are described, "may (may)" means "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (exemplary)" is intended to indicate an example or an illustration.

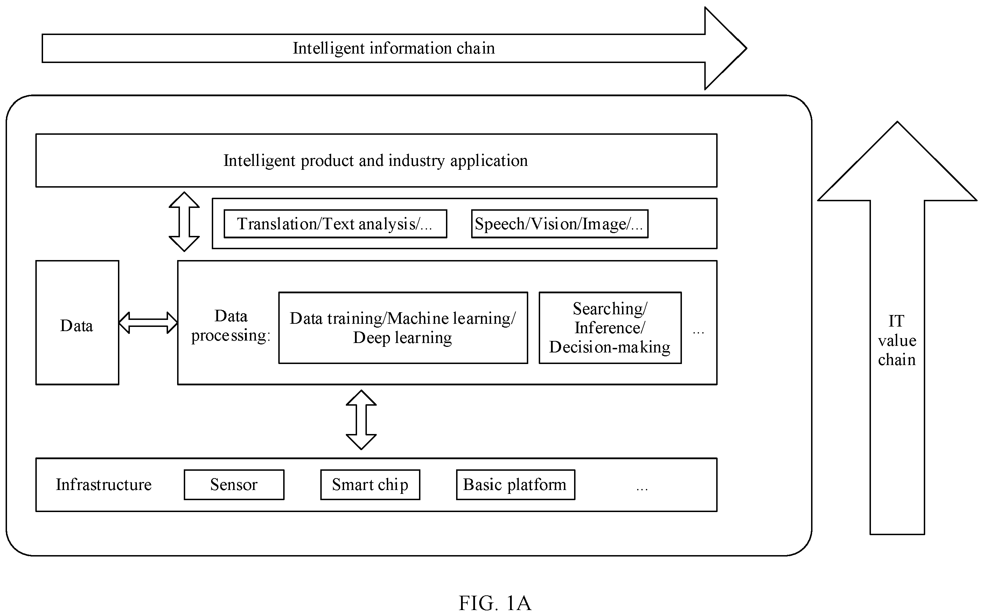

An overall working procedure of an artificial intelligence system is first described. FIG. 1A is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" from an underlying infrastructure and information (providing and processing technology implementation) of artificial intelligence to an industrial ecology process of the system reflects value brought by artificial intelligence to the information technology industry.

### (1) Infrastructure

The infrastructure provides computing capability support for an artificial intelligence system, implements communication with the external world, and implements support by using a basic platform. The infrastructure communicates with the outside by using a sensor. A computing capability is provided by a smart chip (a hardware acceleration chip like a CPU, an NPU, a GPU, an ASIC, or an FPGA). The basic platform includes related platforms such as a distributed compute framework and a network for assurance and support, and may include cloud storage and computing, and an interconnection network, and the like. For example, the sensor communicates with the outside to obtain data, and the data is provided to a smart chip in a distributed computing system provided by the basic platform for computing.

### (2) Data

Data at an upper layer of an infrastructure indicates a data source in the field of artificial intelligence. The data relates to graphics, images, speech, and texts, further relates to internet of things data of a conventional device, and includes service data of an existing system, and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed based on formal information according to an inference control policy. A typical function is searching and matching.

Decision-making is a process in which a decision is made after intelligent information is inferred, and usually provides functions such as classification, ranking, and prediction.

### (4) General capability

After data processing mentioned above is performed on data, some general capabilities may further be formed based on a data processing result. For example, the general capability may be an algorithm or a general system, for example, translation, text analysis, computer vision processing, speech recognition, and image recognition.

### (5) Intelligent product and industry application

The intelligent product and industry application are a product and an application of an artificial intelligence system in various fields, and are package of overall artificial intelligence solutions, to productize and apply intelligent information decision-making. Application fields of the intelligent product and industry application mainly include intelligent terminals, intelligent transportation, intelligent health care, autonomous driving, smart cities, and the like.

This application may be applied to the field of text processing in the field of artificial intelligence. The following describes a plurality of application scenarios by using text processing as an example.

An application scenario of this application is first described.

This application may be applied to an application (which may be referred to as a text generation application below) having a text generation function, a cloud service provided by a server on a cloud side, or the like. Descriptions are separately provided below.

### 1. Text generation application

A product form of embodiments of this application may be the text generation application. An application having a text generation function may run on a terminal device or a server on a cloud side.

In a possible implementation, the text generation application may implement a text generation task based on an input text generation request (including a to-be-processed text sequence), to obtain a processing result.

In particular, the to-be-processed text sequence is a very long text sequence.

The text generation request may indicate a generative task like summarization, dialog, question answering, or translation.

For example, the text generation request may be: Summarize the following text into an abstract of up to 100 words.

For example, the text generation request may be: Respectively use the four words "Pan", "Gu", "Zhi", and Zi" as the beginnings of sentences to write a seven-character quatrain acrostic poem with the rhyme "a".

In a possible implementation, a user may start a text generation application installed on a terminal device, and input a text processing instruction including a to-be-processed text sequence. The text generation application may process, by using a method provided in embodiments of this application, the text processing instruction including the to-be-processed text sequence, and present a processing result to the user (a presentation manner may be, but is not limited to, displaying, saving, or uploading to a cloud side).

In a possible implementation, a user may start a text generation application installed on a terminal device, and input a text processing instruction including a to-be-processed text sequence. The text generation application may send the text processing instruction including the to-be-processed text sequence to a server on a cloud side. The server on the cloud side may process, by using a method provided in embodiments of this application, the text processing instruction including the to-be-processed text sequence, and return a processing result to the terminal device. The terminal device may present the processing result to the user (a presentation manner may be, but is not limited to, displaying, saving, or uploading to the cloud side).

Optionally, input and output may occur on a paid dialog interface, a terminal application service that invokes a related interface, or a built-in function of the terminal device.

The following separately describes the text generation application in embodiments of this application from a functional architecture and a product architecture for implementing a function.

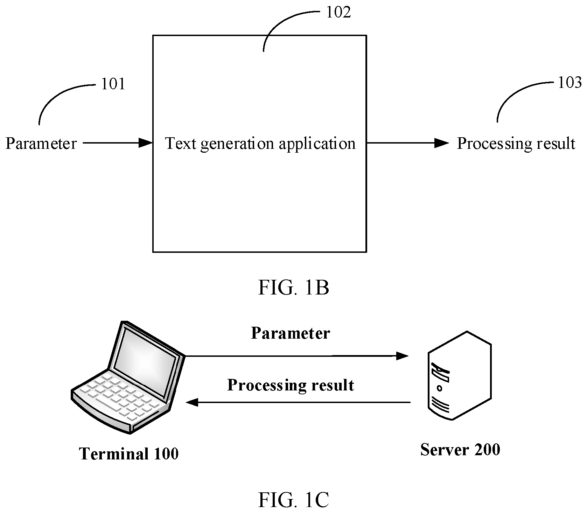

FIG. 1B is a diagram of a functional architecture of a text generation application according to an embodiment of this application.

In a possible implementation, as shown in FIG. 1B, the text generation application 102 may receive an input parameter 101 (for example, a text processing instruction including a to-be-processed text sequence) and generate a processing result 103. The text generation application 102 may be executed on (for example) at least one computer system, and includes computer code. When the computer code is executed by one or more computers, a computer is enabled to perform the method provided in embodiments of this application.

FIG. 1C is a diagram of an entity architecture of running a text generation application according to an embodiment of this application.

FIG. 1C is a diagram of an architecture of a system. The system may include a terminal 100 and a server 200. The server 200 may include one or more servers (in FIG. 1C, an example in which one server is included is used for description), and the server 200 may provide, for one or more terminals, the method provided in embodiments of this application.

A text generation application may be installed on the terminal 100. The application and a web page may provide an interface. The terminal 100 may receive a related parameter input by a user on a text generation interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without collaboration of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

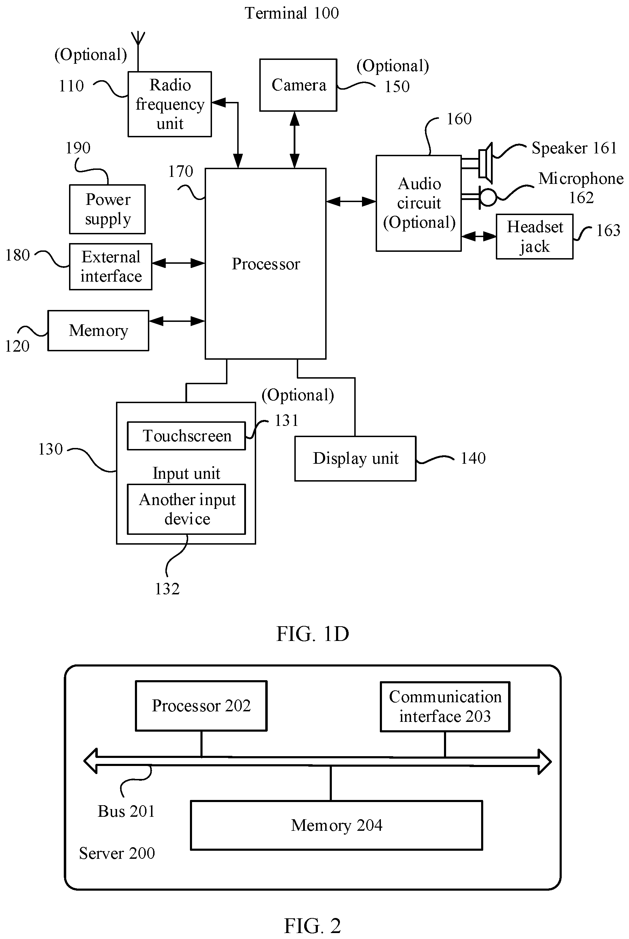

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, or combine some components, or have different components.

The input unit 130 may be configured to receive input digital or character information, and generate key signal input related to a user setting and function control of the portable multi-functional apparatus. Specifically, the input unit 130 may include a touchscreen 131 (optional) and/or another input device 132. The touchscreen 131 may collect a touch operation performed by the user on or near the touchscreen (for example, an operation performed by the user on or near the touchscreen by using any proper object like a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may include the another input device. Specifically, the another input device 132 may include but is not limited to one or more of a physical keyboard, a functional button (for example, a volume control button or an on/off button), a trackball, a mouse, and a joystick.

The input device 132 may receive an input text processing instruction including a to-be-processed text sequence, and the like.

The display unit 140 may be configured to display information input by the user, information provided for the user, various menus of the terminal 100, an interaction interface, and a file; and/or play any multimedia file. In this embodiment of this application, the display unit 140 may be configured to display an interface, a processing result, and the like of the text generation application.

The memory 120 may be configured to store instructions and data. The memory 120 may mainly include an instruction storage region and a data storage region. The data storage region may store various types of data such as a multimedia file and a text. The instruction storage region may store software units such as an operating system, an application, and instructions for at least one function, or subsets and extended sets thereof. The memory 120 may further include a non-volatile random access memory, and provide the processor 170 with hardware, software, and data resources for managing a computing processing device, to support control on the software and the application. The memory 120 is further configured to: store a multimedia file, run a program, and store an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may alternatively not be integrated into the processor 170. In some embodiments, the processor and the memory may be implemented on a single chip. In some embodiments, the processor and the memory may be implemented on independent chips respectively. The processor 170 may be further configured to: generate a corresponding operation control signal, send the operation control signal to a corresponding component in the computing processing device, and read and process data in software, especially read and process the data and the program in the memory 120, so that each functional module performs a corresponding function, to control a corresponding component to perform an action as required by an instruction.

The memory 120 may be configured to store software code related to a text processing method. The processor 170 may perform steps of a text processing method of a chip, or may schedule another unit (for example, the input unit 130 and the display unit 140) to implement a corresponding function.

The radio frequency unit 110 (optional) may be configured to: send and receive signals in an information sending/receiving process or a call process, for example, receive downlink information from a base station, and then send the downlink information to the processor 170 for processing. In addition, the radio frequency unit sends designed uplink data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In this embodiment of this application, the radio frequency unit 110 may send, to the server 200, a text processing instruction including a to-be-processed text sequence, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as management of charging, discharging, and power consumption through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used for representation in FIG. 2, but this does not mean that there is only one bus or only one type of bus.

The processor 202 may be any one or more of processors such as a central processing unit (central processing unit, CPU), a graphics processing unit (graphics processing unit, GPU), a microprocessor (microprocessor, MP), and a digital signal processor (digital signal processor, DSP).

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to a text processing method. The processor 202 may perform steps of a text processing method of a chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the processor may be a hardware system having an instruction execution function, for example, a CPU or a DSP, or may be a hardware system having no instruction execution function, for example, an ASIC or an FPGA, or may be a combination of a hardware system having no instruction execution function and a hardware system having an instruction execution function.

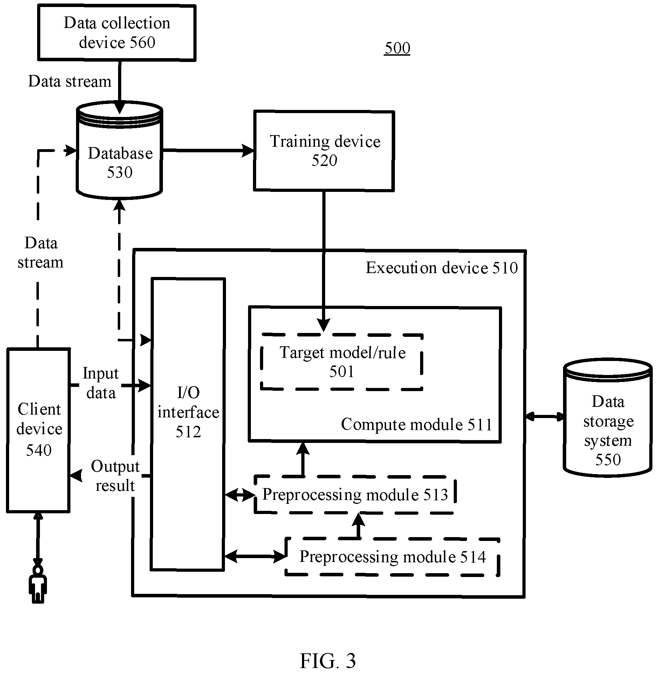

It should be understood that steps related to a model inference process in embodiments of this application relate to an AI-related operation. When the AI operation is performed, an instruction execution architecture of the terminal device and the server is not limited to the foregoing architecture in which the processor and the memory are combined. The system architecture provided in embodiments of this application is described in detail below with reference to FIG. 3.

FIG. 3 is a diagram of the system architecture according to an embodiment of this application. As shown in FIG. 3, the system architecture 500 includes an execution device 510, a training device 520, a database 530, a client device 540, a data storage system 550, and a data collection system 560.

The execution device 510 includes a compute module 511, an I/O interface 512, a preprocessing module 513, and a preprocessing module 514. The compute module 511 may include a target model/rule 501, and the preprocessing module 513 and the preprocessing module 514 are optional.

The execution device 510 may be a terminal device or a server that runs a text generation application.

The data collection device 560 is configured to collect a training sample. After collecting the training sample, the data collection device 560 stores the training sample in the database 530.

The training device 520 may maintain the training sample in the database 530, and pre-train a to-be-trained neural network (for example, a language model in embodiments of this application) to obtain the target model/rule 501.

It should be understood that the training device 520 may perform a pre-training process on the to-be-trained neural network based on the training sample maintained in the database 530, or perform fine-tuning on a model based on pre-training.

It should be noted that, in actual application, the training sample maintained in the database 530 is not necessarily all collected by the data collection device 560, and may be received from another device. In addition, it should be noted that the training device 520 does not necessarily train the target model/rule 501 completely based on the training sample maintained in the database 530, and may obtain a training sample from a cloud or another position to perform model training. The foregoing descriptions should not be construed as a limitation on embodiments of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR) device/a virtual reality (virtual reality, VR) device, or a vehicle-mounted terminal, or may be a server or the like.

Specifically, the training device 520 may transfer a trained model to the execution device 510.

In FIG. 3, an input/output (input/output, I/O) interface 512 is configured for the execution device 510, and is configured to exchange data with an external device. A user may input data (for example, a text processing instruction including a to-be-processed text sequence) to the I/O interface 512 through the client device 540.

The preprocessing module 513 and the preprocessing module 514 are configured to perform preprocessing based on the input data received from the I/O interface 512. It should be understood that there may be no preprocessing module 513 and no preprocessing module 514, or there may be only one preprocessing module. When there is no preprocessing module 513 and no preprocessing module 514, the compute module 511 may be directly used to process the input data.

In a process in which the execution device 510 preprocesses the input data, or in a process in which the compute module 511 in the execution device 510 performs computing and related processing, the execution device 510 may invoke data, code, and the like in the data storage system 550 for corresponding processing, or may further store, in the data storage system 550, data, an instruction, and the like that are obtained through the corresponding processing.

Finally, the I/O interface 512 provides a processing result to the client device 540, to provide the processing result to the user.

In the case shown in FIG. 3, the user may manually provide input data, and an operation may be performed on the "manually provided input data" on an interface provided by the I/O interface 512. In another case, the client device 540 may automatically send input data to the I/O interface 512. If the client device 540 is required to automatically send the input data, the client device 540 needs to obtain authorization from the user, the user may set corresponding permission on the client device 540. The user may view, on the client device 540, a result output by the execution device 510. The result may be specifically presented in a specific manner of displaying, a sound, an action, or the like. The client device 540 may alternatively be used as a data collection end, to collect, as new sample data, input data input to the I/O interface 512 and an output result output from the I/O interface 512 that are shown in the figure, and store the new sample data into the database 530. Certainly, the client device 540 may alternatively not perform collection, and the I/O interface 512 directly stores, into the database 530 as new sample data, the input data input to the I/O interface 512 and the output result output from the I/O interface 512 that are shown in the figure.

It should be noted that FIG. 3 is merely a diagram of the system architecture according to an embodiment of this application. A position relationship between a device, a component, a module, and the like shown in the figure constitutes no limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows.

In embodiments of this application, the compute module 511 in the execution device 510 may obtain the code stored in the data storage system 550, to implement steps related to a model inference process in embodiments of this application.

In embodiments of this application, the compute module 511 in the execution device 510 may include a hardware circuit (for example, an application-specific integrated circuit (application-specific integrated circuit, ASIC), a field-programmable gate array (field -programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of a hardware system having no instruction execution function and a hardware system having an instruction execution function.

Specifically, the compute module 511 in the execution device 510 may be a hardware system having an instruction execution function. The steps related to the model inference process provided in embodiments of this application may be software code stored in a memory. The compute module 511 in the execution device 510 may obtain the software code from the memory, and execute the obtained software code to implement the steps related to the model inference process provided in embodiments of this application.

It should be understood that the compute module 511 in the execution device 510 may be a combination of a hardware system having no instruction execution function and a hardware system having an instruction execution function. Some of the steps related to the model inference process provided in embodiments of this application may be implemented by the hardware system having no instruction execution function in the compute module 511 in the execution device 510. This is not limited herein.

Details from a perspective of model training are as follows.

In embodiments of this application, the training device 520 may obtain code stored in a memory (which is not shown in FIG. 3, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of a hardware system having no instruction execution function and a hardware system having an instruction execution function.

It should be understood that the training device 520 may be a combination of a hardware system having no instruction execution function and a hardware system having an instruction execution function. Some of the steps related to model training provided in embodiments of this application may be implemented by the hardware system having no instruction execution function in the training device 520. This is not limited herein.

### 2. Text generation cloud service provided by a server:

In a possible implementation, the server may provide a text generation service for a device side through an application programming interface (application programming interface, API).

A terminal device may send a related parameter (for example, a text processing instruction including a to-be-processed text sequence) to the server through an API provided by a cloud. The server may obtain a processing result and the like based on the received parameter, and return the processing result to the terminal.

For descriptions of the terminal and the server, refer to the descriptions in the foregoing embodiments. Details are not described herein again.

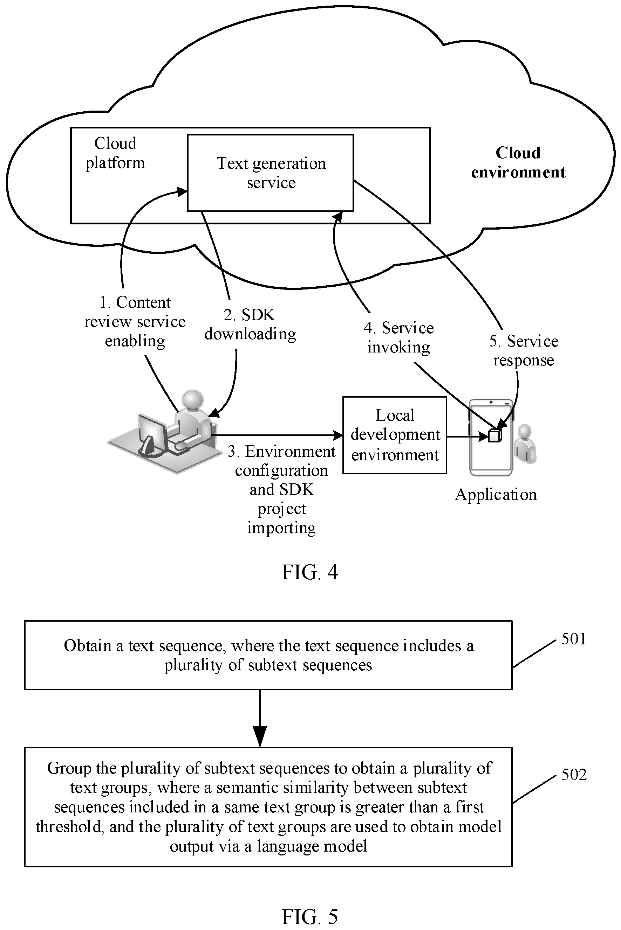

FIG. 4 shows a procedure of using a text generation cloud service provided by a cloud platform.
1. Enable and purchase a text generation service.
2. A user may download a software development kit (software development kit, SDK) of the text generation service. Usually, the cloud platform provides SDKs of a plurality of development versions for the user to select based on a development environment requirement, for example, a Java-version SDK, a Python-version SDK, a PHP-version SDK, and an Android-version SDK.
3. After locally downloading an SDK of a corresponding version based on the requirement, the user imports an SDK project to a local development environment, and performs configuration and debugging in the local development environment. Another function may further be developed in the local development environment, to form an application that integrates a text generation capability.
4. When the text generation application is used, an API invocation for text generation may be triggered when a text needs to be generated. When triggering a text generation function, the application initiates an API request to a running instance of the text generation service in the cloud environment. The API request carries a text processing instruction including a to-be-processed text sequence. The running instance in the cloud environment processes the text processing instruction including the to-be-processed text sequence, to obtain a processing result.
5. The cloud environment returns the processing result to the application, to complete one invocation of the method provided in embodiments of this application.

Embodiments of this application relate to massive application of a neural network. Therefore, for ease of understanding, the following first describes related terms and related concepts such as the neural network in embodiments of this application.

### (1) Neural network

The neural network may include a neuron. The neuron may be an operation unit that uses xₛ (namely, input data) and an intercept of 1 as input. Output of the operation unit may be as follows: ${h}_{W , b} \left(x\right) = f \left({W}^{T}x\right) = f \left({\sum }_{s = 1}^{n} {W}_{s} {x}_{s} + b\right) .$

Herein, s=1, 2, ..., or n, n is a natural number greater than 1, Wₛ is a weight of xₛ, and b is a bias of the neuron. f is an activation function (activation function) of the neuron, and is used to introduce a nonlinear feature into the neural network, to convert an input signal in the neuron into an output signal. The output signal of the activation function may be used as input of a next convolutional layer, and the activation function may be a sigmoid function. The neural network is a network formed by connecting a plurality of single neurons together. To be specific, output of a neuron may be input of another neuron. Input of each neuron may be connected to a local receptive field of a previous layer to extract a feature of the local receptive field. The local receptive field may be a region including several neurons.

### (2) Deep neural network

The deep neural network (Deep Neural Network, DNN), also referred to as a multi-layer neural network, may be understood as a neural network having a plurality of hidden layers. There is no special measurement standard for "a plurality of" herein. The DNN is divided based on positions of different layers, and a neural network in the DNN may be divided into three types: an input layer, a hidden layer, and an output layer. Generally, a first layer is the input layer, a last layer is the output layer, and a middle layer is the hidden layer. Layers are fully connected to each other. To be specific, any neuron at an i^{th} layer is necessarily connected to any neuron at an (i+1)^{™} layer. Although the DNN seems to be complex, the DNN is actually not complex in terms of work at each layer, and is simply expressed as the following linear relation expression: y̅ = α(Wx̅ + b̅), where x̅ is an input vector, y̅ is an output vector, b̅ is a bias vector, W is a weight matrix (also referred to as a coefficient), and a is an activation function. At each layer, only such a simple operation is performed on the input vector x̅, to obtain the output vector y̅. Because the DNN includes a large quantity of layers, there are a large quantity of coefficients W and a large quantity of bias vectors b̅. Definitions of these parameters in the DNN are as follows: The coefficient W is used as an example. It is assumed that in a three-layer DNN, a linear coefficient from a 4^{th} neuron at a second layer to a 2^{nd} neuron at a third layer is defined as ${w}_{24}^{3}$. The superscript 3 represents a layer at which the coefficient W is located, and the subscript represents an output third-layer index 2 and an input second-layer index 4. In conclusion, a coefficient of a k^{th} neuron at an (L-1)^{th} layer to a j^{th} neuron at an L^{th} layer is defined as ${W}_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at a plurality of layers).

### (3) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

### (4) Loss function

In a process of training a deep neural network, because it is expected that output of the deep neural network is as close as possible to a value that actually needs to be predicted, a current predicted value of the network may be compared with an actually expected target value, and then a weight vector at each layer of the neural network is updated based on a difference between the current predicted value and the target value (certainly, there is usually an initialization process before first updating, to be specific, a parameter is preconfigured for each layer of the deep neural network). For example, if the predicted value of the network is high, the weight vector is adjusted to decrease the predicted value, and adjustment is continuously performed, until the deep neural network can predict the actually expected target value or a value that is very close to the actually expected target value. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.
(6) Embedding: is low-dimensional embedding representation of high-dimensional words or sentences, so that words or sentences whose word or sentence embedding vectors are close in distance have similar meanings.
(7) Token: is an element generated through text tokenization.
(8) Tokenizer: The tokenizer is used to tokenize a text based on a vocabulary and generate indices.
(9) Foundation model: The foundation model is usually a large language model that has been pre-trained on a large scale based on data from different fields.
(10) Pre-training: Pre-training is a process of learning from a large amount of (texts) input information without labeling, by using a self-supervised method, and models used for pre-training are usually classified into autoregressive models and autoencoder models.

A large language model is a neural network model that is trained based on a large amount of text data and that has a large quantity of parameters. The large language model can accurately understand the meaning of a language text or generate a specified natural language text, and can effectively process various natural language processing tasks, such as translation, dialogue, and code generation, which are important tasks. Therefore, it has great commercial value. However, a current large language model usually has a limit on a length of an input text, and therefore cannot be effectively deployed in long-text scenarios, such as books, academic papers, or legal contracts.

There are usually two main reasons for the limit on the length of the input text of the language model. First, the language model is usually trained based on short texts, and positional encoding of the large language model does not directly adapt to long texts. As a result, performance of the large language model on the long texts significantly deteriorates. Second, inference costs of the language model increase with the length of the input text. Longer texts impose higher loads on an inference engine and a platform.

Therefore, there is an urgent need for a method for increasing an effective input length of the language model.

To resolve the foregoing problem, embodiments of this application provide a text processing method. The following describes in detail the text processing method in embodiments of this application with reference to accompanying drawings.

FIG. 5 is a schematic flowchart of a text processing method according to an embodiment of this application. As shown in FIG. 5, the text processing method provided in this embodiment of this application may be, but is not limited to, a feedforward process of model pre-training, a feedforward process during model fine-tuning, a model inference process, or the like. Specifically, the method may include steps 501 and 502. The following separately describes these steps in detail.

501: Obtain a text sequence, where the text sequence includes a plurality of subtext sequences.

In a feedforward process of model training (for example, pre-training or fine-tuning), the text sequence may be a training sample that needs to be processed by a language model.

In the feedforward process of model training, the text sequence may be the training sample that needs to be processed by the language model.

In the model inference process, the text sequence may be a text sequence to be processed by the language model. For example, the text sequence may be carried in a text processing request.

In a possible implementation, a length of the text sequence is large, and exceeds a processing length supported by input of the language model. Therefore, the text sequence needs to be compressed.

In this embodiment of this application, the text sequence may be divided (or partitioned) to obtain a plurality of subtext sequences. For example, the text sequence may be a text paragraph including a plurality of sentences. Sentence-level partitioning may be performed on the text sequence. In other words, each subtext sequence may include one or more sentences. For example, a quantity of characters in each subtext sequence obtained through partitioning may be controlled to be less than or equal to a preset value.

Different subtext sequences obtained through division may overlap with each other or may be completely staggered with each other. Overlapping may improve consecutiveness of partitioned content. For example, at least two of the plurality of subtext sequences obtained by dividing the text sequence may overlap with each other.

In a possible implementation, the text sequence includes m sentences, the subtext sequence includes n sentences, and n<m.

For example, the text sequence may include 10 sentences:
a sentence 1, a sentence 2, a sentence 3, a sentence 4, a sentence 5, a sentence 6, a sentence 7, a sentence 8, a sentence 9, and a sentence 10.

When the subtext sequences are completely staggered with each other, the plurality of subtext sequences obtained through division may include the following subtext sequences:
a subtext sequence 1: a sentence 1, a sentence 2, and a sentence 3;
a subtext sequence 2: a sentence 4, a sentence 5, a sentence 6, and a sentence 7; and
a subtext sequence 3: a sentence 8 and a sentence 9.

When the subtext sequences overlap with each other, the plurality of subtext sequences obtained through division may include the following subtext sequences:
a subtext sequence 1: a sentence 1, a sentence 2, a sentence 3, and a sentence 4; and
a subtext sequence 2: a sentence 4, a sentence 5, a sentence 6, and a sentence 7; and
a subtext sequence 3: a sentence 8 and a sentence 9.

There is an overlapping part (the sentence 4) between the subtext sequence 1 and the subtext sequence 2.

502: Group the plurality of subtext sequences to obtain a plurality of text groups, where a semantic similarity between subtext sequences included in a same text group is greater than a first threshold, and the plurality of text groups are used to obtain model output via a language model.

Embodiments of this application intend to extend a limit on a length of an input text that can be processed by the language model, to increase an effective input length of the language model. There are usually two main reasons for the limit on the length. First, the language model is usually trained based on short texts, and positional encoding of the large language model does not directly adapt to long texts. As a result, performance of the large language model on the long texts significantly deteriorates. Second, inference costs of the language model increase with the length of the input text. Longer texts impose higher loads on an inference engine and a platform.

Therefore, semantic compression needs to be performed on the input text. However, there is also a limit on the length of the input text during model compression. Therefore, before semantic compression is performed, the text sequence may be divided, each subtext sequence obtained through division is compressed, and then, processing results are concatenated. This is equivalent to performing compression in a manner of concatenation after division.

However, dividing the text sequence may damage coherence in the text, and consequently, a large amount of text semantic information is lost when each subtext sequence is compressed. Therefore, an idea of this application is to design a grouping manner for a subtext sequence, so that subtext sequences included in each text group can describe content with similar semantics, and coherence of content of each subtext sequence can be maintained. This reduces a loss of text semantic information during compression, improves compression effect, and further improves processing effect of the language model.

A natural language text sequence usually has a hierarchical structure. For example, a book usually has a chapter structure, each chapter describes complete content, and chapters are connected together to form a complete book. Although not all texts have a chapter structure, the chapter structure can be implicitly modeled using topic paragraphs. Each topic paragraph describes similar content, which is different from content before and after the topic paragraph. If a long text is divided based on topic paragraphs, content of each topic can be compressed independently while coherence of the content is maintained. After the compressed content is summarized in sequence, a better semantic processing result of the long text can be obtained.

Each topic paragraph obtained through division may be a text group in this embodiment of this application. In other words, subtext sequences in one text group may express a same topic.

In a possible implementation, a semantic similarity between subtext sequences included in a same text group is greater than the first threshold, and a semantic similarity between subtext sequences included in different text groups is less than the first threshold. In other words, each text group obtained through division may include subtext sequences with similar semantics, and semantics of subtext sequences included in different text groups are greatly different from each other.

The following describes an example of a manner of grouping a plurality of subtext sequences:

In a possible implementation, embedding processing may be performed on each subtext sequence by using a pre-trained embedding model to obtain an embedding vector, and a weighted graph may be constructed based on embedding vectors of a plurality of subtext sequences. A similarity between embedding vectors is strength of connection between partitions in the graph (the connection strength is represented by a weight value, and therefore, a graph structure may be referred to as the weighted graph). In this case, modeling of the weighted graph between the subtext sequences can be obtained. After the weighted graph of a long text is obtained, consecutive community structures in the graph can be found, which is equivalent to finding division of topic paragraphs, and each community structure corresponds to one text group. The community structure is closely connected internally, but is weakly connected externally. This is consistent with an idea of topic paragraphs for implicit modeling. In other words, each community structure may include a plurality of graph nodes, each graph node corresponds to one subtext sequence, a similarity between subtext sequences in each community structure is high, and a similarity between subtext sequences in different community structures is low.

In addition, to ensure high consecutiveness between subtext sequences in a same text group (in other words, positions in the original text sequence are consecutive or very close, so that richer consecutive semantic information can be identified in a compression process, thereby improving compression quality), when the subtext sequences are grouped, in addition to a semantic similarity, a similarity between positions, of the subtext sequences, in the text sequence may also be considered. That is, a similarity between positions of subtext sequences included in a same text group, in the text sequence may be greater than a second threshold through grouping. In addition, a similarity between positions, of subtext sequences included in a same text group, in the text sequence may be less than the second threshold through grouping.

The following describes an example of a manner of grouping a plurality of subtext sequences:

The foregoing implementation of the weighted graph is used as an example. To obtain consecutive community structures, a relationship between nodes that are far away from each other may be masked. For example, a weight value of connection between nodes that are far away from each other in the graph may be set to 0. In this way, nodes included in the topic paragraph are also adjacent partitions that are arranged in sequence.

The plurality of text groups are used to obtain the model output via the language model.

After the plurality of text groups are obtained, compression, sequence extension, and other processing may further be performed on each text group.

Compression is used as an example. In this embodiment of this application, each of the plurality of text groups may be compressed to obtain a plurality of processing results. Further, that the plurality of text groups may be used to obtain the model output via the language model includes: The plurality of processing results are used to obtain the model output via the language model, and the plurality of processing results are used to obtain a processing result of the text sequence via the language model.

In a possible implementation, compression is semantic compression used for reducing a text length. In semantic compression, a long text input to the language model is compressed into a short natural language text while important semantic information is retained. In this way, an input length of the large language model is equivalently extended. In addition, in this embodiment of this application, subtext sequences in each text group obtained through grouping describe content with similar semantics, and coherence of content of each subtext sequence can be maintained. This reduces a loss of text semantic information during compression, and improves compression effect.

For example, the plurality of processing results may be obtained based on the plurality of text groups via the language model or a machine learning model other than the language model. Machine learning used for compression also has a limit on a length of an input text. However, in the manner in this application, the text sequence is grouped, and during compression, a long text input to the compression model is segmented and grouped to obtain a short text group. In this way, the input length of the compression model is equivalently extended. In addition, subtext sequences included in each text group describe content with similar semantics, and coherence of content of each subtext sequence can be maintained. This reduces a loss of text semantic information during compression, and improves compression effect.

The plurality of processing results are concatenated based on a relationship between positions, of the plurality of text groups, in the text sequence, to obtain a concatenated processing result. After the compressed content is summarized in sequence, a better semantic processing result of the long text can be obtained.

In a possible implementation, the processing result of the text sequence may be obtained via the language model based on the plurality of processing results.

Optionally, the plurality of processing results may be extended by using a sequence extension method, and then, the processing result of the text sequence may be obtained via the language model based on the plurality of extended processing results.

The language model may be the large language model (large language model, LLM). The language model may execute a text processing task, to obtain a processing result. For example, the text processing task may be, but is not limited to, summary generation, question answering, and text translation.

The following describes a procedure in this embodiment of this application with reference to a specific example.

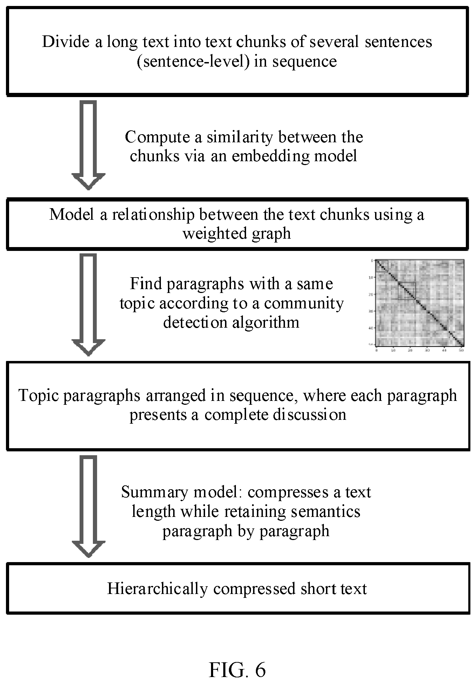

Refer FIG. 6. A long text is first divided into sentence-level partitions. Herein, partitioning herein may control a quantity of characters in the partition, or characters in partitions may overlap with each other, to ensure consecutiveness of partitioned content. After the sequential partitions are obtained, a pre-trained sentence embedding model may be used to embed the partitions into vectors. A similarity between the vectors is strength of connection between the partitions in a graph. In this way, modeling of the weighted graph between texts is obtained. After a graph structure of the long text is obtained, consecutive community structures in the graph are found, which is equivalent to finding division of topic paragraphs. The community structure is closely connected internally, but is weakly connected externally. This is consistent with an idea of topic paragraphs for implicit modeling. To obtain consecutive community structures, a relationship between partitions that are far away from each other is masked, that is, a value of the partitions in the graph is set to 0. In this way, partition chunks obtained by using a partition algorithm on the graph are required topic paragraphs. In this way, the topic paragraphs are obtained, and the topic paragraph also includes adjacent partitions that are arranged in sequence. A semantic processing result of the long text is obtained through sequential summarization after model compression. Although a length is reduced, critical semantic information is retained.

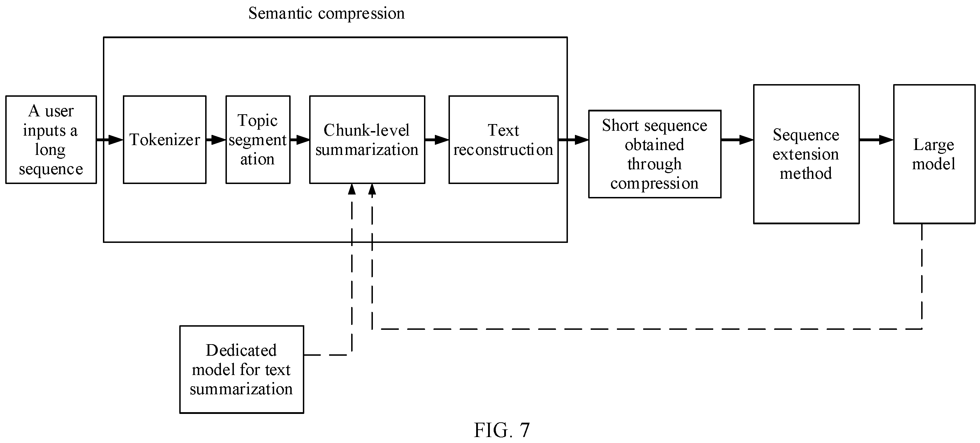

Embodiments of this application are applicable to scenarios in which the large language model processes a text whose length exceeds a maximum text length of the model, and may also help reduce scenarios in which a large model encounters a memory limit during inference. FIG. 7 is a diagram of an application architecture according to an embodiment of this application.

A tokenizer may be configured to specify an action of dividing a text sequence to obtain a plurality of subtext sequences, topic segmentation may perform an action of grouping the plurality of subtext sequences, chunk-level summarization may perform an action of compressing each text group, and text reconstruction may perform an action of concatenating a plurality of processing results.

Embodiments of this application can effectively extend the input length of the large language model in natural language tasks. Gain results obtained through comparison with other extension methods from datasets are as follows.

**Table 1**

| Model | GovReport | QMSum | MutiNews |
|---|---|---|---|
| LGPT3.5-Turbo-16k | 29.5 | 23.4 | 126.7 |
| Llama2-7B-chat-4k+Summ | 17.9 | 16.6 | 17.9 |
| Llama2-7B-chat-4k+Ours | 27.7 | 121.2 | 26.4 |

A long-text summarization task may be completed by directly partitioning a summary based on the input length of the large language model and then performing summarization. This technical solution is natural extension of this solution from a semantic perspective. As shown in the results in Table 1, the solution provided in this embodiment of this application has significant gain effect compared with an existing solution.

A question answering task is more complex than the summarization task, and cannot be processed through concatenation after partitioning. All information needs to be processed at a time. A key retrieval task is a question answering task that can be generated to any length, and is a common dataset for testing an input length extension solution of a large model. Refer to Table 2. A result of llama2 in Table 2 shows that llama2 has an input limit of 4,000 tokens. Model performance deteriorates sharply when the limit is exceeded. However, after this solution is applied to llama 2, the input length can be extended to 30,000 tokens, with accuracy of over 90%. This solution can also be easily combined with other extension solutions, to further increase the limit on the length of the input text.

**Table 2**

| Task | Method | Dataset1 | Dataset2 | Dataset3 |
|---|---|---|---|---|
| | | NarrativeQA | Qasper | MultiFieldQA-en |
| | Llama2-7B-chat-4k | **18.7** | 19.2 | 36.8 |
| Single-Doc QA | yarn-64k | 12.4 | 12.8 | 27.0 |
| | Ours | 17.1 | **22.1** | **39.1** |

| | | HotpotQA | 2WikiMultihopQA | MuSiQue |
|---|---|---|---|---|
| | Llama2-7B-chat-4k | 25.4 | **32.8** | 9.4 |
| Multi-Doc QA | yarn-64k | 9.9 | 9.8 | 5.0 |
| | Ours | **29.2** | 31.0 | **15.0** |

| | | GovReport | QMSum | MutiNews |
|---|---|---|---|---|
| | Llama2-7B-chat-4k | 27.3 | 20.8 | 25.8 |
| Summarization | yarn-64k | 26.8 | **21.5** | 13.9 |
| | Ours | **27.7** | 21.3 | **26.4** |

| | | TREC | TriviaQA | SAMSum |
|---|---|---|---|---|
| | Llama2-7B-chat-4k | 61.5 | 77.8 | 40.7 |
| Few-Shot Learning | yarn-64k | **71.5** | **89.5** | **42.5** |
| | Ours | 56.5 | 80.2 | 41.2 |

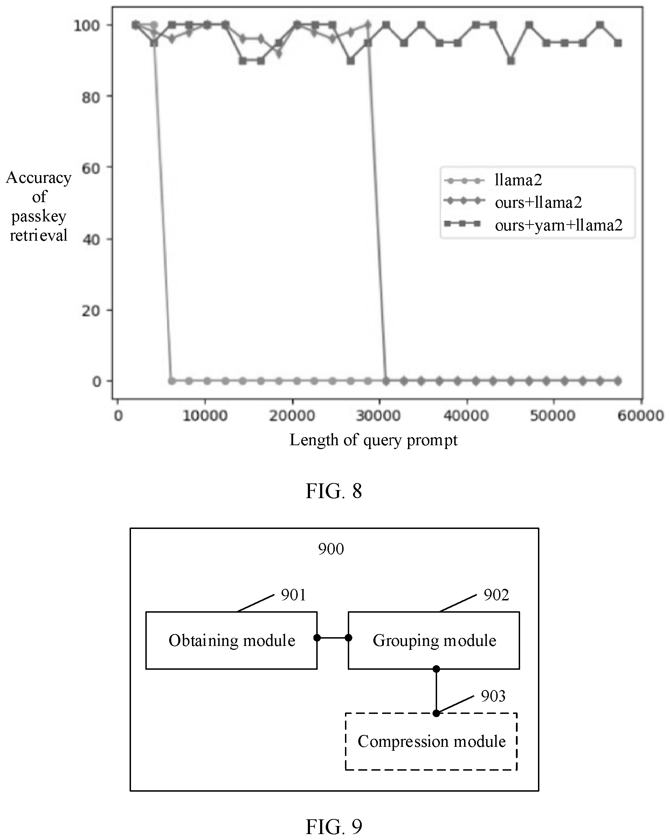

LongBench is a comprehensive long-text task dataset, including four types of tasks: single-text question answering, multi-document question answering, summarization, and few-shot learning. Three English datasets are evaluated for each type. Results in FIG. 8 show that the method provided in embodiments of this application outperforms the optimal extension method yarn in academia in most tasks, and outperforms the original model in most tasks.

FIG. 9 is a diagram of a structure of a text processing apparatus according to an embodiment of this application. As shown in FIG. 9, the text processing apparatus 900 provided in this embodiment of this application includes:
an obtaining module 901, configured to obtain a text sequence, where the text sequence includes a plurality of subtext sequences.

For specific descriptions of the obtaining module 901, refer to the descriptions of step 501 in the foregoing embodiment. Details are not described herein again.

The text processing apparatus 900 further includes: a grouping module 902, configured to group the plurality of subtext sequences to obtain a plurality of text groups, where a semantic similarity between subtext sequences included in a same text group is greater than a first threshold, and the plurality of text groups are used to obtain model output via a language model. For specific descriptions of the grouping module 902, refer to the descriptions of step 502 in the foregoing embodiment. Details are not described herein again.

In a possible implementation, the apparatus further includes:
a compression module 903, configured to compress each of the plurality of text groups to obtain a plurality of processing results.

That the plurality of text groups are used to obtain the model output via the language model includes:

The plurality of processing results are used to obtain the model output via the language model.

In a possible implementation, a semantic similarity between subtext sequences included in different text groups is less than the first threshold.

In a possible implementation, a similarity between positions, of subtext sequences included in a same text group, in the text sequence is greater than a second threshold.

In a possible implementation, a similarity between positions, of subtext sequences included in a same text group, in the text sequence is less than the second threshold.

In a possible implementation, at least two of the plurality of subtext sequences overlap with each other.

In a possible implementation, the compression module 903 is further configured to:
concatenate the plurality of processing results based on a relationship between positions, of the plurality of text groups, in the text sequence, to obtain a concatenated processing result.

In a possible implementation, the apparatus further includes:
a task processing module, configured to obtain a processing result of the text sequence via the language model based on the plurality of text groups.

In a possible implementation, the compression module 903 is specifically configured to:
compress each of the plurality of text groups via the language model or a machine learning model other than the language model, to obtain the plurality of processing results.

In a possible implementation, the model output is a result obtained by performing one of the following tasks on the text sequence:
a summary extraction task, a text generation task, a dialog task, a question answering task, a text translation task, and a knowledge retrieval task.

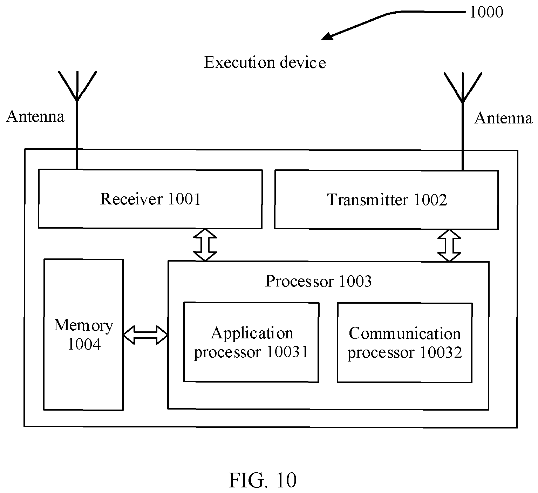

The following describes an execution device provided in an embodiment of this application. FIG. 10 is a diagram of a structure of an execution device according to an embodiment of this application. The execution device 1000 may be specifically represented as a virtual reality VR device, a mobile phone, a tablet computer, a notebook computer, a smart wearable device, a monitoring data processing device, a server, or the like. This is not limited herein. Specifically, the execution device 1000 includes a receiver 1001, a transmitter 1002, a processor 1003, and a memory 1004 (there may be one or more processors 1003 in the execution device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subset thereof, or an extended set thereof. The operation instructions may include various operation instructions for implementing various operations.

The processor 1003 controls an operation of the execution device. In a specific application, components of the execution device are coupled together through a bus system. In addition to a data bus, the bus system may further include a power bus, a control bus, a status signal bus, and the like. However, for clarity of description, various buses are referred to as the bus system in the figure.

The method disclosed in embodiments of this application may be applied to the processor 1003, or may be implemented by the processor 1003. The processor 1003 may be an integrated circuit chip, and has a signal processing capability. In an implementation process, steps in the method may be implemented through a hardware integrated logic circuit in the processor 1003, or by using instructions in a form of software. The processor 1003 may be a general-purpose processor, a digital signal processor (digital signal processor, DSP), a microprocessor, or a microcontroller, and may further include an application-specific integrated circuit (application specific integrated circuit, ASIC), a field-programmable gate array (field-programmable gate array, FPGA) or another programmable logic device, a discrete gate or transistor logic device, or a discrete hardware component. The processor 1003 may implement or perform the method, steps, and logic block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1004. The processor 1003 reads information in the memory 1004, and completes, in combination with hardware of the processor 1003, the steps related to a model inference process in the foregoing method.

The receiver 1001 may be configured to: receive input digit or character information, and generate a signal input related to related setting and function control of the execution device. The transmitter 1002 may be configured to output digital or character information through a first interface. The transmitter 1002 may further be configured to send an instruction to a disk group through the first interface, to modify data in the disk group. The transmitter 1002 may further include a display device like a display.

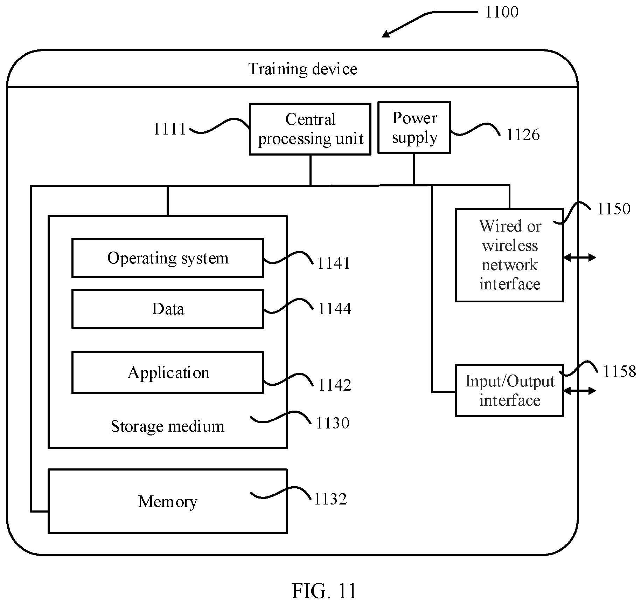

An embodiment of this application further provides a training device. FIG. 11 is a diagram of a structure of a training device according to an embodiment of this application. Specifically, the training device 1100 is implemented by one or more servers. The training device 1100 may differ greatly due to different configurations or performance, and may include one or more central processing units (central processing units, CPUs) 1111 (for example, one or more processors), a memory 1132, and one or more storage media 1130 (for example, one or more massive storage devices) that store an application 1142 or data 1144. The memory 1132 and the storage medium 1130 may be transient storage or persistent storage. A program stored in the storage medium 1130 may include one or more modules (not shown in the figure), and each module may include a series of instruction operations for the training device. Further, the central processing unit 1111 may be configured to communicate with the storage medium 1130, and perform, on the training device 1100, a series of instruction operations in the storage medium 1130.

The training device 1100 may further include one or more power supplies 1126, one or more wired or wireless network interfaces 1150, one or more input/output interfaces 1158, or one or more operating systems 1141, such as Windows ServerTM, Mac OS XTM, UnixTM, LinuxTM, and FreeBSDTM.

In this embodiment of this application, the central processing unit 1111 is configured to perform an action related to model training in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the text processing method described in the foregoing embodiment, or a chip in the training device performs the text processing method described in the foregoing embodiment. Optionally, the storage unit is a storage unit in the chip, for example, a register or a cache. Alternatively, the storage unit may be a storage unit, for example, a read-only memory (read-only memory, ROM), another type of static storage device that can store static information and instructions, or a random access memory (random access memory, RAM), in a wireless access device but outside the chip.

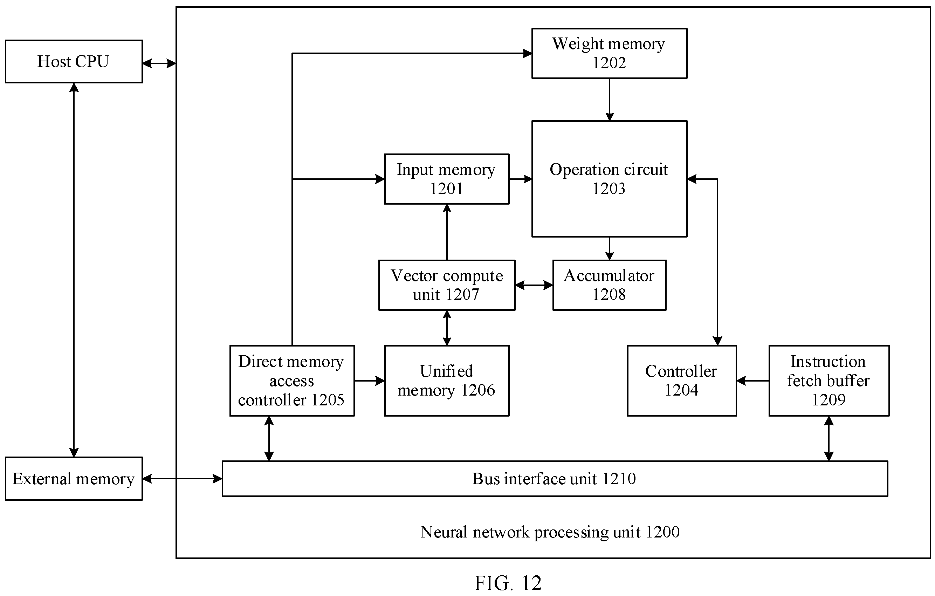

Specifically, FIG. 12 is a diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of process engines (process engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and buffers the data on each PE in the operation circuit. The operation circuit fetches data of the matrix A from an input memory 1201, to perform a matrix operation on the matrix B, and stores an obtained partial result or an obtained final result of the matrix into an accumulator (accumulator) 1208.

A unified memory 1206 is configured to store input data and output data. Weight data is directly transferred to the weight memory 1202 through a direct memory access controller (Direct Memory Access Controller, DMAC) 1205. The input data is also transferred to the unified memory 1206 through the DMAC.

A BIU is a bus interface unit, namely, a bus interface unit 1210, and is configured to perform interaction between an AXI bus and the DMAC and between the AXI bus and an instruction fetch buffer (Instruction Fetch Buffer, IFB) 1209.

The bus interface unit (Bus Interface Unit, BIU for short) 1210 is used by the instruction fetch buffer 1209 to obtain an instruction from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector compute unit 1207 includes a plurality of operation processing units. If necessary, further processing, for example, vector multiplication, vector addition, an exponential operation, a logarithmic operation, and value comparison is performed on output of the operation circuit 1203. The vector compute unit is mainly used for network computing, for example, batch normalization (batch normalization), pixel-level summation, or upsampling on a feature plane, at a non-convolutional/fully connected layer of a neural network.

In some implementations, a processed vector output by the vector compute unit 1207 can be stored into the unified memory 1206. For example, the vector compute unit 1207 may apply a linear function or a nonlinear function to the output of the operation circuit 1203, for example, perform linear interpolation on a feature plane extracted at a convolutional layer. For another example, the linear function or the nonlinear function is applied to a vector of an accumulated value to generate an activation value. In some implementations, the vector compute unit 1207 generates a normalized value, a pixel-level summation value, or both a normalized value and a pixel-level summation value. In some implementations, the processed output vector can be used as an activation input to the operation circuit 1203, for example, used in a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located at one place, or may be distributed on a plurality of network units. A part or all of the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may be implemented by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or a part of the foregoing embodiments may be implemented by software, hardware, firmware, or any combination thereof. When the software is used for implementation, all or a part of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A text processing method, wherein the method comprises:
obtaining a text sequence, wherein the text sequence comprises a plurality of subtext sequences; and
grouping the plurality of subtext sequences to obtain a plurality of text groups, wherein a semantic similarity between subtext sequences comprised in a same text group is greater than a first threshold, and the plurality of text groups are used to obtain model output via a language model.

2. The method according to claim 1, wherein the method further comprises:
compressing each of the plurality of text groups to obtain a plurality of processing results; and
that the plurality of text groups are used to obtain the model output via the language model comprises:
the plurality of processing results are used to obtain the model output via the language model.

3. The method according to claim 1 or 2, wherein a semantic similarity between subtext sequences comprised in different text groups is less than the first threshold.

4. The method according to any one of claims 1 to 3, wherein a similarity between positions, of subtext sequences comprised in a same text group, in the text sequence is greater than a second threshold.

5. The method according to any one of claims 1 to 4, wherein a similarity between positions, of subtext sequences comprised in a same text group, in the text sequence is less than the second threshold.

6. The method according to any one of claims 1 to 5, wherein at least two of the plurality of subtext sequences overlap with each other.

7. The method according to any one of claims 2 to 6, wherein the method further comprises:
concatenating the plurality of processing results based on a relationship between positions, of the plurality of text groups, in the text sequence, to obtain a concatenated processing result.

8. The method according to any one of claims 1 to 7, wherein the method further comprises:
obtaining a processing result of the text sequence via the language model based on the plurality of text groups.

9. The method according to any one of claims 2 to 8, wherein compressing each of the plurality of text groups to obtain the plurality of processing results comprises:
compressing each of the plurality of text groups via the language model or a machine learning model other than the language model, to obtain the plurality of processing results.

10. The method according to any one of claims 1 to 9, wherein the model output is a result obtained by performing one of the following tasks on the text sequence:
a summary extraction task, a text generation task, a dialog task, a question answering task, a text translation task, and a knowledge retrieval task.

11. A text processing apparatus, wherein the apparatus comprises:
an obtaining module, configured to obtain a text sequence, wherein the text sequence comprises a plurality of subtext sequences; and
a grouping module, configured to group the plurality of subtext sequences to obtain a plurality of text groups, wherein a semantic similarity between subtext sequences comprised in a same text group is greater than a first threshold, and the plurality of text groups are used to obtain model output via a language model.

12. The apparatus according to claim 11, wherein the apparatus further comprises:
a compression module, configured to compress each of the plurality of text groups to obtain a plurality of processing results; and
that the plurality of text groups are used to obtain the model output via the language model comprises:
the plurality of processing results are used to obtain the model output via the language model.

13. The apparatus according to claim 11 or 12, wherein a semantic similarity between subtext sequences comprised in different text groups is less than the first threshold.

14. The apparatus according to any one of claims 11 to 13, wherein a similarity between positions, of subtext sequences comprised in a same text group, in the text sequence is greater than a second threshold.

15. The apparatus according to any one of claims 11 to 14, wherein a similarity between positions, of subtext sequences comprised in a same text group, in the text sequence is less than the second threshold.

16. The apparatus according to any one of claims 11 to 15, wherein at least two of the plurality of subtext sequences overlap with each other.

17. The apparatus according to any one of claims 12 to 16, wherein the compression module is further configured to:
concatenating the plurality of processing results based on a relationship between positions, of the plurality of text groups, in the text sequence, to obtain a concatenated processing result.

18. The apparatus according to any one of claims 11 to 17, wherein the apparatus further comprises:
a task processing module, configured to obtain a processing result of the text sequence via the language model based on the plurality of text groups.

19. The apparatus according to any one of claims 11 to 18, wherein the model output is a result obtained by performing one of the following tasks on the text sequence:
a summary extraction task, a text generation task, a dialog task, a question answering task, a text translation task, and a knowledge retrieval task.

20. The apparatus according to any one of claims 12 to 19, wherein the compression module is specifically configured to:
compress each of the plurality of text groups via the language model or a machine learning model other than the language model, to obtain the plurality of processing results.

21. A computer storage medium, wherein the computer storage medium stores one or more instructions, and when the instructions are executed by one or more computers, the one or more computers are enabled to perform an operation in the method according to any one of claims 1 to 10.

22. A computer program product, comprising computer-readable instructions, wherein when the computer-readable instructions are run on a computer device, the computer device is enabled to perform the method according to any one of claims 1 to 10.

23. A system, comprising at least one processor and at least one memory, wherein the processor and the memory are connected to and communicate with each other through a communication bus;
the at least one memory is configured to store code; and
the at least one processor is configured to execute the code to perform the method according to any one of claims 1 to 10.

24. A chip, comprising a processor, wherein the processor is configured to support a text processing apparatus to implement the method according to any one of claims 1 to 10.
